# EUROPÄISCHE PATENTSCHRIFT

(11) **EP 2 638 796 B1**
(45) Veröffentlichungstag und Bekanntmachung des Hinweises auf die Patenterteilung: **29.06.2016**
(21) Anmeldenummer: 13159191.9
(22) Anmeldetag: 14.03.2013
(51) Int. Cl.: A01F 25/16

(54) **Fahrsiloanordnung und Verfahren zu dessen Folienabdeckung sowie Einrichtung und Verfahren zur Folienaufdeckung hierfür**
Travelling silo arrangement and method for covering it with a film and device and method for removing the film
Agencement de silos-tranchés et son procédé de revêtement de film ainsi que dispositif et procédé de recouvrement par film correspondant

(30) Priorität: 15.03.2012 DE 102012102175
(43) Veröffentlichungstag der Anmeldung: 18.09.2013
(73) Patentinhaber: Wasserbauer GmbH, 4595 Waldneukirchen (AT)
(72) Erfinder: Schmid, Josef, 72525 Münsingen (DE); Schmid, Philipp, 72525 Münsingen (DE)
(74) Vertreter: KLIMENT & HENHAPEL

(56) Entgegenhaltungen:
- EP-A1- 1 166 618
- EP-A1- 1 889 535
- DE-A1- 10 058 493
- DE-A1-102008 061 767

## Beschreibung

Die Erfindung betrifft eine Fahrsiloanordnung.

Fahrsilos weisen typischerweise einen langgestreckten Siloraum auf, welcher seitlich durch im wesentlichen parallele, in Längsrichtung verlaufende Seitenwände sowie an einer Rückseite durch eine Rückwand begrenzt und nach oben und an einer Vorderseite offen ist. Das in den Siloraum eingebrachte und verdichtete Pflanzenmaterial wird mit einer im wesentlichen luftdichten Folienanordnung abgedeckt, um das Pflanzenmaterial anaerob zu Silage zu vergären, die insbesondere als Tierfutter dienen kann. Die Folienanordnung kann zum Schutz gegen Beschädigung, insbesondere durch Vögel, mit einer Schutzeinrichtung wie z. B. einem Schutzgitter überdeckt werden. Die Folienanordnung kann mit Gewichten beschwert sein. Die Folienanordnung besteht in gebräuchlicher Ausführung aus zwei übereinander liegenden Folien, wobei die untere, dem als Silostock bezeichneten Silagematerial zugewandte Folie dünner ist.

Die Luftabdichtung der Folienanordnung zu den Seitenwänden hin kann gemäß der EP 2 338 324 A1 beispielsweise dadurch erfolgen, dass über der Folienanordnung entlang der Seitenwände Spannseile verlaufen. Aus der DE 41 41 633 A1 ist es bekannt, eine Abdichtung gegen die Seitenwände in der Art herzustellen, dass in der Oberseite der Seitenwände Nuten vorgesehen sind, in welchen die Planenränder durch einen flexiblen Strang, beispielsweise einen Schlauch, eingeklemmt gehalten sind.

Die Entnahme des Silagematerials aus dem Fahrsilo erfolgt typischerweise über einen längeren Zeitraum nach Bedarf in Teilmengen, wobei die nach Entnahme einer solchen Teilmenge jeweils verbleibende Silagemenge nachfolgend als Silo-Reststock bezeichnet sei. Die Folienanordnung wird typischerweise manuell jeweils abschnittsweise entsprechend dem Entnahmefortschritt von der Oberfläche des Silostocks entfernt. Aus der DE 10 2008 061 767 A1 ist eine in Längsrichtung auf den Seitenwänden verfahrbare Aufdeckeinrichtung bekannt, welche bei der Verfahrung in Richtung der Rückwand des Fahrsilos die Folienanördnung auf einen Folienwickel aufwickelt.

Nach der Öffnung des Silostocks und Entnahme einer Teilmenge ist es wünschenswert, die Oberseite des Silagematerials im Silo-Reststock weiter mit der Folienanordnung bedeckt zu halten und das Silagematerial gegen die Futterqualität beeinträchtigende Einwirkungen zu schützen. Die DE 10 2008 061767 A1 zeigt eine Fahrsiloanordnung mit den Merkmale des Oberbegriffes des Anspruchs 1.

Der vorliegenden Erfindung liegt die Aufgabe zugrunde, eine Fahrsiloanordnung, zur schrittweisen Abnahme einer Folienanordnung von der Oberseite eines Silostocks anzugeben, welche bei der schrittweisen Entnahme von Teilmengen des Silagematerials aus dem Fahrsilo einen guten Schutz für das Silagematerial des Silo-Reststocks gewährleisten.

Die erfindungsgemäße Lösung ist in demunabhängigen Anspruch 1 beschrieben. Die abhängigen Ansprüche enthalten vorteilhafte Ausgestaltungen und Weiterbildungen.

Die Niederhalteeinrichtung bewirkt nach jeder Entnahme einer Teilmenge von Silage auf einfache Weise eine Beibehaltung des Schutzes des Silagematerials im Silo-Reststock durch Abdeckung der Oberseite und weitgehender Erhaltung der Abdichtung der Oberseite des Silostocks gegen Luftzutritt. Insbesondere ist die Niederhalteeinrichtung auch wirksam gegen das Abheben der Folienanordnung durch Windeinfluss.

Die Niederhalteeinrichtung kann in vorteilhafter Ausführung eine zusammen mit der Aufdeckeinrichtung verfahrbare Gewichtsanordnung mit einem oder vorzugsweise mehreren Gewichten enthalten, welche auf die Folienanordnung nahe bei der Vorderkante des Silo-Reststocks auflegbar sind und dort Niederhaltekräfte auf die Folienanordnung ausüben. Die Vorderkante des Silo-Reststocks liegt im Regelfall in Längsrichtung im wesentlichen bei der Position des Folienwickels, auf welchen der vom Silostock abgehobene Teil der Folienanordnung aufgewickelt wird. Durch die mit der Aufdeckeinrichtung verfahrbare Gewichtsanordnung kommt die Gewichtsanordnung immer nahe bei der Vorderkante des Silo-Reststocks zur Auflage auf die Folienanordnung.

Die Gewichtsanordnung kann beispielsweise eine Mehrzahl von Rollen enthalten, welche vorteilhafterweise in Längsrichtung eine im wesentlichen zueinander gleiche Position einnehmen und vertikal verlagerbar und dadurch dem Verlauf der Oberseite des Silostocks nachführbar gehalten sind.

In bevorzugter Ausführung ist die Gewichtsanordnung mittels einer vorzugsweise motorisch betätigbaren Hebeeinrichtung von der Folienanordnung abhebbar bzw. auf diese absenkbar, wobei die Hebeeinrichtung die Gewichtsanordnung vor Beginn einer Verfahrung der Aufdeckeinrichtung von der Folienanordnung abhebt und nach Abschluss einer Verfahrung oder nach Abschluss der Entnahme der gewünschten Teilmenge von Silage in der neuen Längsposition wieder auf die Folienanordnung absenkt. Die Gewichtsanordnung besteht vorteilhafterweise aus in horizontaler Querrichtung aufeinander folgenden und vorzugsweise miteinander verbundenen Teilgewichten. Die Folge von Teilgewichten ermöglicht vorteilhafterweise ein in Querrichtung gleichmäßiges Andrücken der Folienanordnung auf die Oberseite des Silo-Reststocks auch bei unebener Oberseite. Die Hebeeinrichtung kann vorteilhafterweise mehrere flexible Zugelemente wie Seile, Bänder, Gurte enthalten, welche motorisch auf eine Wickeleinrichtung, insbesondere eine gemeinsame Wickelwelle aufwikkelbar bzw. von dieser abwickelbar sind und an ihren der Wickeleinrichtung abgewandten Enden mit der Gewichtsanordnung verbunden sind.

In besonders vorteilhafter Ausführung enthält die Niederhalteeinrichtung wenigstens zwei seitlich nahe bei den Seitenwänden angeordnete Rollen, welche mit über der Folienanordnung in Längsrichtung entlang der Seitenwände verlaufenden flexiblen und zugfesten Spannelementen zusammenwirken und unter Ausübung von Niederhaltekräften auf der Folienanordnung unter Zwischenfügen der Spannelemente abrollbar sind. Die Spannelemente sind vorteilhafterweise an oder bei der Rückseite des Fahrsilos zugfest verankert. Die wenigstens zwei Rollen befinden sich in bezüglich der verfahrbaren Aufdeckeinrichtung im wesentlichen konstanter Längsposition und sind vertikal relativ zu der Aufdeckeinrichtung entgegen der Niederhaltekräfte verlagerbar und dadurch der in Längsrichtung veränderlichen Höhe des Silostocks nachführbar.

Die Spannelemente können vorteilhafterweise in zur EP 2 338 324 A1 ähnlicher Art während des Gärprozesses zur Lagesicherung der Folienanordnung entlang der Seitenwände dienen. Bei der abschnittsweisen Verfahrung der Aufdeckeinrichtung entsprechend der wiederholten Entnahme von Teilmengen des Silostocks können die Spannelemente vorteilhafterweise auf eine weitere Wickeleinrichtung der Aufdeckeinrichtung aufgewickelt werden und in ihrem Abschnitt zwischen Rollen und Rückwand weiterhin die Folienanordnung entlang der Seitenwände auf der Oberseite des Silo-Reststocks halten. In besonders vorteilhafter Ausführung kann eine Verfahrung der Aufdeckeinrichtung in Längsrichtung auf die Rückseite des Fahrsilos zu in der Weise bewerkstelligt sein, dass eine die Spannelemente aufwickelnde motorisch angetriebene Wikkeleinrichtung auf die Spannelemente eine Zugkraft ausübt, wodurch wegen der zugfesten Verankerung der Spannelemente an der Rückseite der Fahrsiloanordnung die Aufdeckeinrichtung über die Spannelemente bei der Aufwicklung in Richtung der Rückseite gezogen wird. Hierdurch ist zum einen die Funktion der Spannelemente als Lagesicherung der Folienanordnung auf dem Silo-Reststock entlang der Seitenwände erhalten und zum anderen eine besonders einfache und zuverlässige, insbesondere vom Schlupf von Antriebsrädern unabhängige Verfahrung gewährleistet.

Die Spannelemente können vorteilhafterweise als Seile oder Gurte ausgeführt sein. Die Spannelemente werden vorteilhafterweise nicht unmittelbar auf die Rollen sondern von auf von diesen beabstandete Wickel aufgewickelt. Für die gleichmäßige Aufwicklung der wenigstens zwei Zugelemente kann ein gemeinsamer Antriebsmotor mit einer gemeinsamen Antriebswelle vorgesehen sein, so dass eine gleichförmige Verfahrung der Aufdeckeinrichtung an beiden in Querrichtung gegenüber liegenden Seiten bei den Seitenwänden gewährleiste ist. In anderer Ausführung mit jeweils einem eigenen Antriebsmotor für getrennte Wickeleinrichtungen für die beiden Spannelemente kann durch an sich bekannte synchrone Motorsteuerung eine gleichförmige Wickelbewegung der beide Motoren gewährleistet werden.

Ein weitgehend luftdichter seitlicher Abschluss der Folienanordnung erfolgt in bevorzugter Ausführung auf an sich bekannte Weise in der Art, dass an der Oberseite der Seitenwände eine nach oben offene Längsnut, beispielsweise in Form eines eingebetteten oder aufgesetzten Längsprofils gegeben ist und Randabschnitte der Folienanordnung seitlich über diese Längsnuten hinaus ragen und durch einen flexiblen Strang, vorzugsweise einen Schlauch in den Längsnuten klemmend in den Längsnuten gehalten sind. Ein als Schlauch ausgebildeter Strang kann vorteilhafterweise nach dem Einbringen in die Nut mit Druckluft beaufschlagt werden, um die Haltekraft zu erhöhen. Mit Beginn der schrittweisen Entnahme von Silage kann der Überdruck im Schlauch aufgehoben werden. Die Einklemmung der Randabschnitte der Folienanordnung ist besonders vorteilhaft in Verbindung mit den entlang der Seitenwände geführten Spannelementen, wodurch die Einklemmung der Randbereiche der Folienanordnung mechanisch weitgehend unbelastet bleibt und langfristig zuverlässig abdichtet.

Vorteilhafterweise ist der von der Oberseite des Silostocks bei Verfahrung der Aufdeckeinrichtung abgehobene Abschnitt der Folienanordnung gegenüber der Oberseite der Seitenwände nach oben geführt, so dass allein durch die Zugkraft, welche vom Folienwickel beim Aufwickeln der Folienanordnung auf die Folienanordnung wirkt, ein mit der Verfahrung fortschreitendes selbsttätiges Lösen des flexiblen Strangs und der Randabschnitte der Folienanordnung aus den Längsnuten erfolgt und kein zusätzlicher manueller Eingriff eines Benutzers erforderlich ist.

Zugleich können vorteilhafterweise Sicherungsmittel vorgesehen sein, welche ein vorzeitiges Lösen von Strang und Randabschnitten der Folienanordnung aus den Längsnuten in dem Längsrichtungsabschnitt zwischen Aufdeckeinrichtung und Rückseite des Fahrsilos, in welchem die Oberseite des Silo-Reststocks weiter durch die Folienanordnung geschützt sein soll, verhindern. Solche mit der Aufdeckeinrichtung verfahrene Sicherungsmittel überdecken die Nut mit in dieser einliegenden Randabschnitten der Folienanordnung und Strang. Die Sicherungsmittel können insbesondere durch eine Räderanordnung, mittels welcher die Aufdeckeinrichtung verfahrbar auf der Oberseite der Seitenwände abgestützt ist, gebildet oder mit dieser gekoppelt sein. Die Abstützung der Räderanordnung kann direkt auf der Oberseite der Seitenwände oder indirekt auf einer Schiene, welche auch die Längsnut bilden kann, erfolgen. Insbesondere können bei in die Oberseite der Seitenwände eingebetteten Längsnuten die Räder auch über den Längsnuten abrollen. Bei auf die Oberseite der Seitenwände aufgesetzten Längsnuten können diese vorteilhafterweise zugleich als Führungen für die Räderanordnung dienen.

Motorische Einrichtungen oder Aktuatoren der Aufdeckeinrichtung, insbesondere ein Antrieb für den Folienwickel, ein Antrieb einer Hebeeinrichtung und ein Antrieb für die Verfahrung, der wie beschrieben vorzugsweise die Spannelemente aufwickelt, sind vorteilhafterweise elektrisch betrieben, wobei vorzugsweise eine Batterie als elektrische Energiequelle auf der Aufdeckeinrichtung angeordnet ist. Die Betätigung der Antriebe und Aktuatoren ist vorteilhafterweise über eine Fernbedienung auslösbar, so dass ein Benutzer die einzelnen Maßnahmen in arbeitsökonomischer Weise von einem bei der Entnahme einer Teilmenge von Silage eingesetzten Fahrzeug aus vornehmen kann.

Die Aufdeckeinrichtung ist vorteilhafterweise nach Leerung des Fahrsilos auf ein anderes Fahrsilo umsetzbar. Die aufgewickelte Folienanordnung wird typischerweise nicht erneut verwendet.

Die Abdeckung des Silostocks mit einer Folienanordnung nach Befüllen des Siloraums erfolgt vorteilhafterweise durch Auflegen der Folienanordnung auf die Oberseite des Silostocks und das Andrücken der Folienanordnung an die Oberseite des Silostocks mittels zweier nahe bei den Seitenwänden in Längsrichtung verlaufender Spannelemente, insbesondere Spanngurte, welche über der Folienanordnung verlaufen und welche durch Verspannen in Längsrichtung die Folienanordnung bei den Seitenwänden gegen die Oberseite des Silostocks drücken. Ein im wesentlichen luftdichter Abschluss der Folienanordnung erfolgt vorteilhafterweise dadurch, dass die Folienanordnung in einer solchen Breite aufgebracht wird, dass die seitlichen Folienränder bis über die Oberseiten der Seitenwände reichen und dort klemmend luftdicht abgeschlossen werden. Die Trennung von mechanischer Festlegung der Folienanordnung entlang der Seitenwände auf der Oberseite des Silostocks und Abdichtung auf den Oberseiten der Seitenwände ist besonders einfach und zugleich zuverlässig dicht.

Die Erfindung ist nachfolgend anhand bevorzugter Ausführungsbeispiele unter Bezugnahme auf die Abbildungen noch eingehend veranschaulicht. Dabei zeigt:
- Fig. 1: ein typisches Fahrsilo mit bedecktem Silostock,
- Fig. 2: ein Detail der Foliensicherung,
- Fig. 3: ein teilweise geleertes Fahrsilo mit einer Aufdeckeinrichtung,
- Fig. 4: Details einer Aufdeckeinrichtung in Seitenansicht,
- Fig. 5: ein Teil der Aufdeckeinrichtung in Frontansicht,
- Fig. 6: ein Detail einer Folien-Niederhaltung.

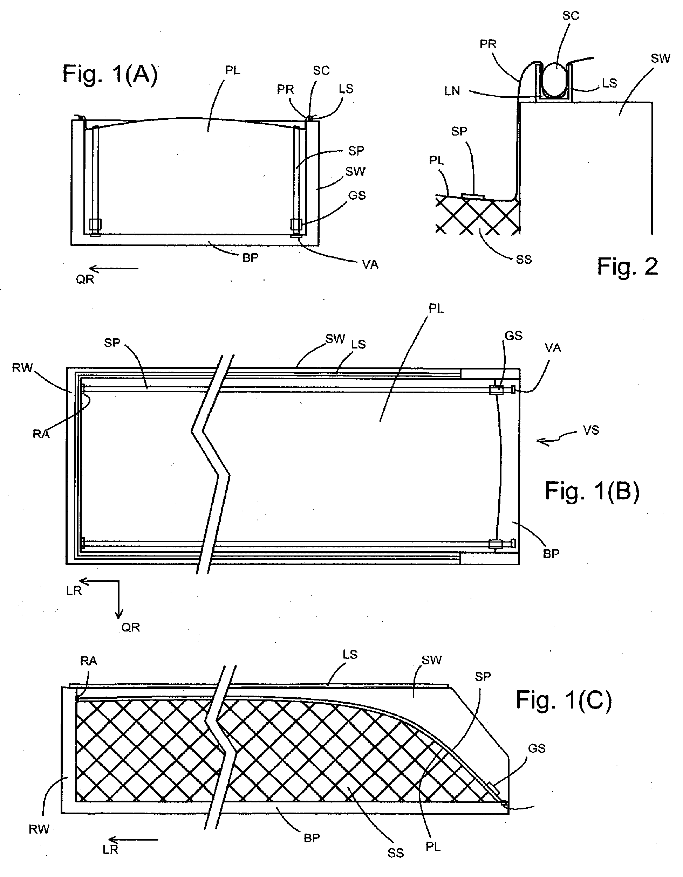

Fig. 1 zeigt eine vorteilhafte Ausführung einer Folienabdeckung eines Silostocks in einem Fahrsilo gebräuchlicher Bauart, wobei Fig. 1 (A) eine Längsansicht von der Vorderseite, Fig. 1 (B) eine Draufsicht und Fig. 1 (C) eine geschnittene Seitenansicht darstellen. Das Fahrsilo bildet mit einer Bodenplatte BP und zwei von dieser nach oben abstehenden Seitenwänden SW einen in horizontaler Längsrichtung LR langgestreckten Siloraum, welcher an einer Vorderseite VS offen und an in Längsrichtung LR entgegen gesetzter Seite typischerweise durch eine Rückwand RW begrenzt sei. Als Querrichtung QR sei die zur Längsrichtung LR rechtwinklig verlaufende Horizontalrichtung bezeichnet.

Für die Befüllung des Fahrsilos wird Siliermaterial im Fahrsilo angehäuft und verdichtet, wobei die Verdichtung typischerweise durch Überfahren des Siliermaterials mit einem landwirtschaftlichen Zugfahrzeug erfolgt. Das verdichtete Siliermaterial wird mit einer Folienanordnung überdeckt, welche in derzeit gebräuchlicher Art aus einer dünneren Unterziehfolie, welche auch als Saugfolie bezeichnet ist, und einer über dieser liegenden dickeren Silofolie besteht. Spannelemente in Form von Spanngurten werden an der Rückwand RW in Verankerungselementen RA, beispielsweise Ösen, verankert, und in geringem seitlichem Abstand, insbesondere weniger als 50 cm von den Seitenwänden entlang dieser in Längsrichtung LR über die Folienanordnung gelegt und in weiteren Verankerungselementen VA an der Vorderseite VS des Silos befestigt und über Spanneinrichtungen, beispielsweise Gurtspanner GS, gespannt. Falls ein Absetzen des abgedeckten Materials während des Gärprozesses zu erwarten ist, kann über die Gurtspanner GS eine Nachspannung vorgenommen werden. Die Oberseite des Siliermaterials bzw. der dieses abdeckenden Folienanordnung PL ist nicht eben und typischerweise in Längsrichtung und in Querrichtung gewölbt.

An der Oberseite der Seitenwände SW sind Längsschienen LS angeordnet, welche nach oben offene Nuten bilden. Seitliche Randabschnitte PR der Folienanordnung sind über diese Längsschienen LS hinweg gelegt und durch Einpressen eines flexiblen und elastischen Strangs, insbesondere eines Schlauchs SC in die Nuten gedrückt und dort klemmend gehalten. Zur Verstärkung der Klemmwirkung kann der Schlauch SC nach Einbringen in die Nut mit Druckluft beaufschlagt werden.

Bei der beschriebenen Art der Bedeckung eines Siliermaterials mit einer Folienanordnung und deren Sicherung mittels der Spanngurte SP und der Einklemmung von Randabschnitten PR in Längsnuten der Längsschienen LS übernehmen die Spanngurte SB primär eine mechanische Festlegung der Folienanordnung entlang der Seitenwände SW und der gegen Umgebungsluft dichte Abschluss des Siliermaterials erfolgt über die Einklemmung der Randabschnitte PR der Folienanordnung in den Längsnuten. Die Längsnuten können sich auch über die Rückwand erstrecken, im Bereich der Vorderseite kommen gebräuchliche Verfahren zur Abdichtung des Folienrands, insbesondere durch Beschwerung, zur Anwendung.

Das Siliermaterial durchläuft anaerob einen Gärprozess, bei welchem vergorenes Material als Silage entsteht, welches unter der Folienanordnung einen in Fig. 1 (C) mit SS bezeichneten Silostock bildet.

Fig. 2 zeigt in gegenüber Fig. 1 vergrößerter Darstellung einen Verlauf der Folienanordnung im Bereich der Oberseite einer Seitenwand. Die Folienanordnung PL liegt auf der Oberseite des Silostocks SS auf und ist nahe bei der Seitenwand SW mittels der Spanngurte SP gegen die Oberseite des Silostocks SS gedrückt und fest auf diesem gehalten. Die Randabschnitte PR der Folienanordnung sind an der Seitenwand nach oben bis auf die Oberseite der Seitenwand SW geführt und dort in einer Längsnut LN eines eine Längsschiene LS bildenden Profils gehalten. Die Längsschiene LS bildet eine nach oben offene Nut. Zur Herstellung der luftdichten Verbindung werden die Randabschnitte PR der Folienanordnung über die Schiene gelegt und ein Schlauch SC, welcher ein Übermaß gegenüber der Breite der Längsnut LN aufweist, wird über die Randabschnitte PR der Folienanordnung gelegt und in die Nut eingedrückt und dort klemmend gehalten. Zur Erhöhung der Klemmkraft kann der Schlauch SC nach dem Eindrücken in die Längsnut mit Druckluft beaufschlagt werden.

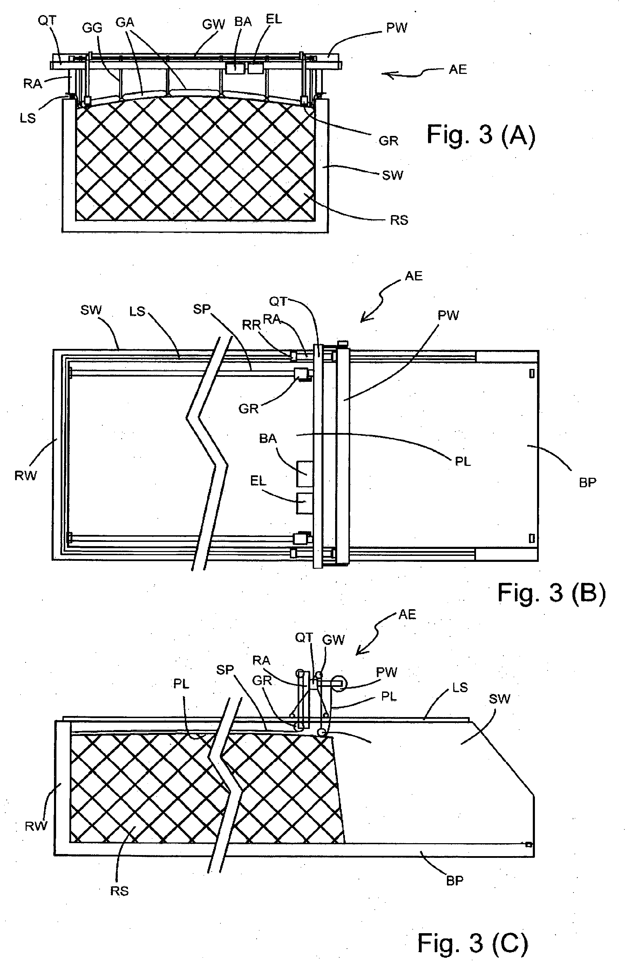

Fig. 3 zeigt ein Fahrsilo der beschriebenen Art in zu Fig. 1 analogen Ansichten nach Entnahme eines Teils der Silage, wobei Fig. 3 (A) eine geschnittene Längsansicht von der Rückseite her darstellt. Die Entnahme von Silage sei als schrittweise Entnahme von Teilmengen in Zeitabständen von einem oder mehreren Tagen angenommen. Für die schrittweise Entnahme muss sukzessive auch die Oberseite des Silagematerials aufgedeckt und von der Folienabdekkung befreit werden. Für das Aufdecken und die Abnahme der Folienanordnung ist eine in Längsrichtung verfahrbare, auf den Oberseiten der Seitenwände SW abgestützte Aufdeckeinrichtung AE vorgesehen, welche insbesondere einen vorzugsweise motorisch angetriebenen Folienwickel PW besitzt, aufweichen die von der Oberseite des Silagematerials abgenommene Folienanordnung aufgewickelt wird. Das im Silo verbliebene Silagematerial sei als Silo-Reststock RS bezeichnet. Der Silo-Reststock RS weist eine annähernd vertikale Vorderkante VK auf, an welcher die Silage frei liegt. Das Freiliegen der Vorderkante VK ist in der Regel tolerierbar, da der Kontakt mit der Umgebungsluft nur bis zur nächsten Teilentnahme gegeben ist. Die Oberseite des Reststocks RS soll aber weiter abgedeckt bleiben, um noch länger lagernde Abschnitte des Reststocks gegen Umgebungseinflüsse zu schirmen.

Die Aufdeckeinrichtung AE wird entsprechend dem Entnahmefortschritt von Teilmengen von Silage aus dem Reststock RS in Längsrichtung LR auf die Rückwand zu verfahren, wobei der Verfahrung in Längsrichtung LR entsprechend Abschnitte der Folienanordnung auf den Folienwickel PW aufgewickelt werden. Für die in Fig. 3 eingetragenen Bezugszeichen wird auch auf die Erläuterungen zu den weiteren Abbildungen verwiesen.

Die Aufdeckeinrichtung AE enthält zum Zwecke des Schutzes noch nicht aufgedeckter Oberseitenbereiche des Silostocks eine Niederhalteeinrichtung, welche im Bereich der Aufdeckeinrichtung AE und insbesondere nahe bei der Vorderkante VK des Silo-Reststocks Niederhaltekräfte auf die Folienanordnung ausüben und die Folienanordnung an die Oberseite des Silo-Reststocks andrücken kann. Die Niederhalteeinrichtung wird mit der Aufdeckeinrichtung AE in zur Längsrichtung paralleler Fahrtrichtung FR bei einer Verfahrung der Aufdeckeinrichtung AE in Längsrichtung LR mitgenommen und verändert dadurch mit jeder Verfahrung die Längsposition der Einwirkung der von der Niederhalteeinrichtung ausgeübten Andruckkraft. Während beim Stand der Technik z. B. eine flexible Beschwerungsplane eine flächige Beschwerung der gesamten Oberseite der Folienanordnung bildet und Teile dieser Beschwerungsplane von der Oberseite der Folienanordnung abgehoben und auf einen gesonderten Wickel aufgewickelt werden und somit bei der Verfahrung der bekannten Aufdeckeinrichtung die Niederhaltefunktion sukzessive beseitigt wird, wird die Niederhalteeinrichtung bei der vorliegenden Erfindung mit fortschreitender Entnahme von Silomaterial und entsprechend schrittweiser Verfahrung der Aufdeckeinrichtung AE in immer neue Längspositionen gebracht, um an solchen neuen Längspositionen eine zuverlässige Erhaltung der Abdeckung des Silo-Reststocks zu gewährleisten.

Die mit der Aufdeckeinrichtung AE verbundene Niederhalteeinrichtung kann in vorteilhafter Ausführung insbesondere eine Gewichtsanordnung GA und/oder Andruckrollen GR enthalten, deren Anordnung und Wirkungsweise nachfolgend noch im Detail beschrieben ist.

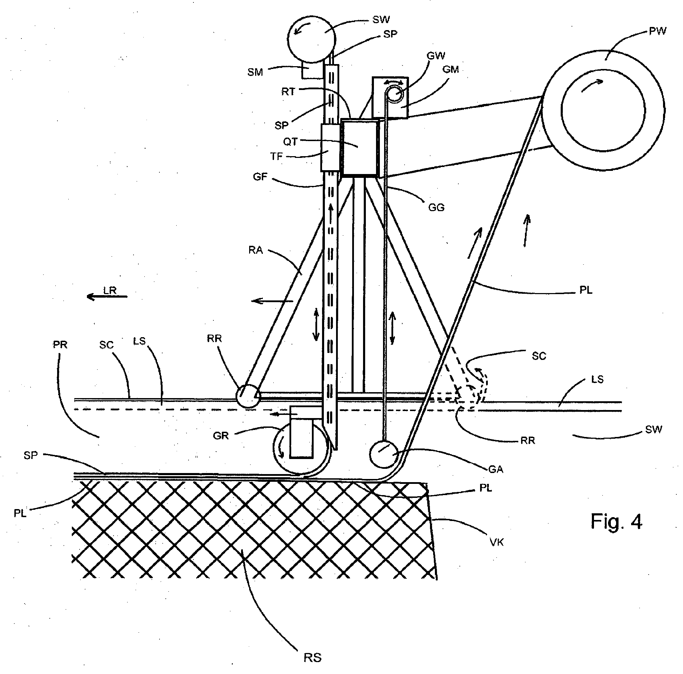

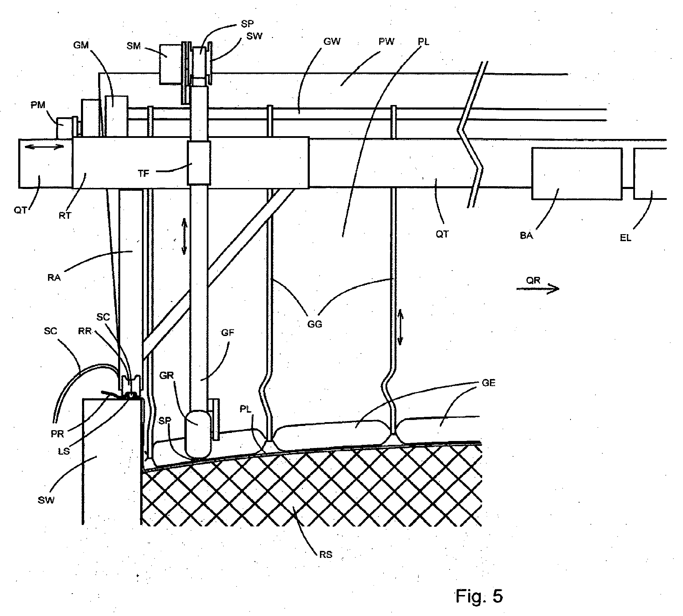

Fig. 4 zeigt in Seitenansicht und Fig. 5 in Ansicht von der Rückwand her schematisch Details einer vorteilhaften Ausführung einer in Längsrichtung LR verfahrbaren Aufdeckeinrichtung. Diese enthält auf den in Querrichtung gegenüber liegenden Seiten bei den den Siloraum bzw. den Reststock RS begrenzenden Seitenwänden SW jeweils eine Rahmenkonstruktion RA, welche über eine Räderanordnung auf den Seitenwänden direkt oder indirekt abgestützt ist. Die beiden in Querrichtung beabstandeten Rahmen RA sind über eine senkrecht zur Zeichenebene der Fig. 4 verlaufende Quertraverse QT beabstandet. Die Quertraverse QT kann beispielsweise durch einen Balken, ein metallisches Profil oder eine Gitterträgerkonstruktion gegeben sein. An der Quertraverse gehalten ist ein in Fahrtrichtung FR nacheilend angeordneter Folienwickel PW, auf welchen von der Oberfläche des Silo-Reststocks RS abgehobene Abschnitte der Folienanordnung aufgewickelt werden. Der Drehrichtung des Folienwickels PW ist mit einem Pfeil angegeben. Die Drehung des Folienwickels wird vorteilhafterweise durch einen in Fig. 4 nicht mit eingezeichneten Elektromotor bewirkt, dessen Antriebskraft so bemessen ist, dass eine zuverlässige Aufwicklung von abgehobener Folienanordnung möglich ist, dass aber keine starken Zugkräfte auf die Folienanordnung ausgeübt werden. Die Aufwickelkraft soll aber ausreichen, um den die Randabschnitte der Folienanordnung klemmend in der Längsnut der Längsschiene LS haltenden Schlauch SC nach oben aus der Nut auszuziehen und somit auch die Folienränder zur Aufwicklung frei zu geben. Ein Aufwickeln des aus der Längsnut herausgezogenen Schlauchabschnitts ist nicht vorgesehen, so dass dieser seitlich nach unten hängt.

Die Räderanordnung, über welche der Rahmen RA verfahrbar auf der Oberseite der Seitenwand SW abgestützt ist, enthält im skizzierten vorteilhaften Beispiel Führungsrollen RR als Räder, welche auf der Längsschiene LS abrollen und diese in Querrichtung beidseitig übergreifen, so dass die Längsschiene LS zugleich eine Führung der Räderranordnung und des Rahmens RA bildet, wie in der schematischen Ansicht eines Teils der Aufdeckeinrichtung mit Blickrichtung entgegen der Längsrichtung in Fig. 5 ersichtlich ist.

Der Querabstand der gegenüber liegenden Rahmen RA der Aufdeckeinrichtung AE ist vorteilhafterweise veränderlich, beispielsweise indem wenigstens einer der Rahmen RA über eine Verbindungsanordnung RT so an der Quertraverse QT gehalten ist, dass eine Querverschiebung zwischen Verbindungseinrichtung RT und Quertraverse QT möglich ist. Hierdurch kann vorteilhafterweise zum einen berücksichtigt werden, dass nicht alle Fahrsilos eine exakt gleiche Breite besitzen und dass zum anderen die Seitenwände eines Fahrsilos nicht als exakt parallel angenommen werden können, so dass auch im Verlauf der Verfahrung der Aufdeckeinrichtung eine Veränderung des Querabstands der Rahmen erfolgen kann.

Die motorische Verfahrung der Aufdeckeinrichtung AE in Fahrtrichtung FR erfolgt in bevorzugter Ausführung auf die Weise, dass die Spannelemente SP auf jeweils einen Spannelementwickel SW motorisch aufgewickelt werden, wobei der Antriebsmotor für den Spannelementwickel SW auf die an der Rückwand des Fahrsilos verankerten Spannelemente eine Zugkraft in solcher Höhe ausübt, dass durch diese Zugkraft die Aufdeckeinrichtung in Richtung der Rückwand gezogen wird. Der Verlauf der Spannelemente nahe bei den Seitenwänden und somit mit großem gegenseitigen Querabstand begünstigt eine gleichmäßige Verfahrung über beide Seitenwände mit gleichbleibender Ausrichtung der Quertraverse in Querrichtung.

Diese Art der motorischen Verfahrung der Aufdeckeinrichtung ist vorteilhafterweise mit einem Teil der Niederhalteeinrichtung in der Weise verbunden, dass auf der Folienanordnung PL über dem Silo-Reststock RS abrollende Rollen GR vorgesehen sind, welche mit einer Niederhaltekraft auf die zwischen Rollen GR und Folienanordnung liegende Spannelemente und die Folienanordnung drükken. Die Rollen GR sind hierfür in vertikaler Richtung relativ zu der verfahrbaren Aufdeckeinrichtung verlagerbar und in horizontaler Längsrichtung an die Verfahrung der Aufdeckeinrichtung AE gekoppelt. Die Rollen bilden einen Teil der Niederhalteeinrichtung.

Für die Aufwicklung der Spannelemente SP ist vorzugsweise ein von einem Motor SM angetriebener Spannelementwickel SW von den Rollen GR beabstandet. Im skizzierten Beispiel sind die Rollen GR und der Spannelementwikkel SW über eine stabile Führung GF vertikal beabstandet und starr miteinander verbunden, wobei vorteilhafterweise die Führung GF als ein offenes oder geschlossenes Hohlprofil ausgeführt sein kann, in welchem der Abschnitt des Spanngurtes SP zwischen Rollen GR und Spannelementwickel SW geschützt geführt ist. Durch die starre Verbindung zwischen Spannelementwickel SW und Rollen GR über die Führung GF wirkt sich die durch den Antriebsmotor des Spannelementwickels SW bewirkte Zugkraft auf das Spannelement SP nur als die Verfahrung bewirkende, im wesentlichen horizontale Kraft auf den Abschnitt des Spannelements SP zwischen Rollen GR und Rückwand RW aus, ohne dass zusätzlich eine auf die aus Spannelementwickel SW, Führung GF und Rolle GR einwirkende resultierende Vertikalkraft entsteht.

Die Führung GF ist ihrerseits in einer Trägerführung TF vertikal verschiebbar geführt, wobei die Trägerführung TF die feste Kopplung der Horizontalverfahrung der Rollen GR und des Rahmens RA gewährleistet, zugleich aber eine Vertikalverschiebung der Einheit aus Rollen GR, Führung GF und Spannelementwickel SW in vertikaler Richtung relativ zu der Quertraverse ermöglicht, so dass die Rollen GR bei unebener Oberseite des Silo-Reststocks RS dem Verlauf der Oberseite in Längsrichtung folgend vertikal verlagerbar sind und mit im wesentlichen konstanter Andrückkraft, welche vorteilhafterweise allein durch das Gewicht der Baueinheit aus Spannelementwickel, Führung GF und Rollen GR gegeben sein kann, auf die Spannelemente bzw. die Folienanordnung drücken. Die Führung GF gewährleistet zugleich, dass der Spanngurt SP immer unter der Rolle GR verläuft und gegebenenfalls in Querrichtung in die Position unter der Rolle GR nachgezogen wird.

Die Niederhalteeinrichtung enthält im skizzierten bevorzugten Beispiel ferner eine Gewichtsanordnung GA, welche, wie insbesondere aus der Ansicht nach Fig. 5 ersichtlich ist, eine Mehrzahl von Gewichten GE enthält. Die Gewichte GE können in bevorzugter Ausführung in Querrichtung QR miteinander verbunden sein. In bevorzugter Ausführung kann die Gewichtsanordnung GA durch einen mit einem Beschwerungsmaterial, insbesondere Sand gefüllten Schlauch aus flexiblem Gewebe oder Folie gebildet sein, welcher sich im wesentlichen über die Breite des Fahrsilos erstreckt und dessen Einzelgewichte GE durch Schlauchabschnitte gebildet sind. Am Übergang zwischen in Querrichtung aufeinander folgenden Schlauchabschnitten als Gewichten GE sind vorteilhafterweise flexible Zugelemente GG, beispielsweise Gewebegurte mit der Gewichtsanordnung GA verbünden. Die Zugelemente GG führen zu einer weiteren Wickeleinrichtung einer Hebeeinrichtung. Die weitere Wickeleinrichtung kann in bevorzugter einfacher Ausführung eine die Breite des Fahrsilos überspannende gemeinsame Wickelwelle GW für alle Zugelemente GG sein und einen eigenen, bidirektional betreibbaren Antriebsmotor aufweisen. Mittels dieses Antriebsmotors und der Wickelwelle GW können die Gewichte GE der Gewichtsanordnung GA durch synchrones Aufwickeln aller Zugelemente GG auf die Wickelwelle angehoben werden, wie dies in Fig. 4 skizziert ist. In dieser angehobenen Position der Gewichtsanordnung GA kann die Aufdeckeinrichtung AE in Längsrichtung verfahren und die von der Oberseite des Reststocks RS abgehobenen Abschnitte auf den Folienwickel PW aufgewickelt werden.

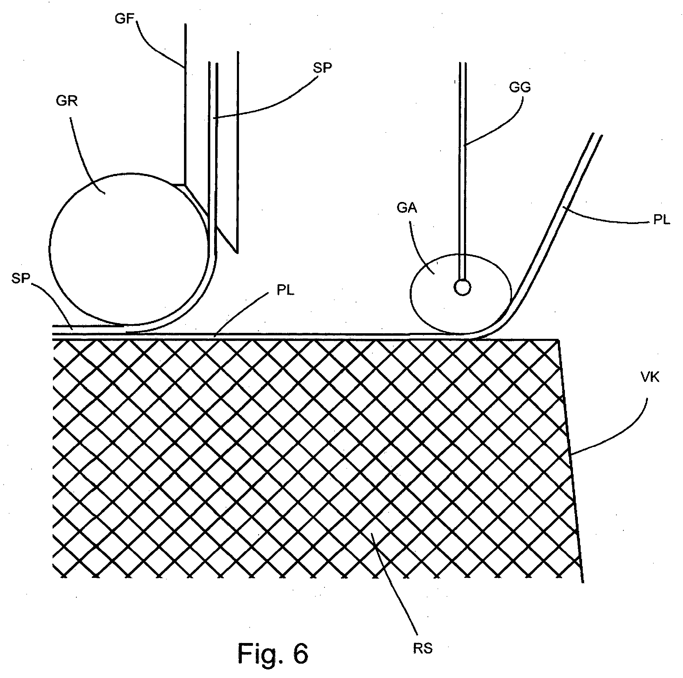

Nach Abschluss einer Verfahrung, eventuell auch erst nach Abschluss der Entnahme der gewünschten Teilmenge von Silage aus dem Fahrsilo, werden durch entgegen gesetzte Drehung der Wickelwelle GW die Zugelemente GG von dieser wieder abgewickelt und die Gewichte GE der Gewichtsanordnung GA senken sich ab und drücken mit ihrer Gewichtskraft die Folienanordnung PL nahe bei der Vorderkante VK des Silo-Reststocks auf die Oberseite des Silagematerials und bewirken somit einen fortbestehenden Schutz der Oberseite des Silagematerials gegen Umgebungseinflüsse, wie dies in Fig. 3 und Fig. 5 und detaillierter in der Seitenansicht nach Fig. 6 dargestellt ist.

Die Antriebsmotoren für den Folienwickel PW, den Spannelementwickel SW und die Wickelwelle GW der Hebeeinrichtung sind vorteilhafterweise als Elektromotoren ausgeführt und können insbesondere mit den jeweiligen Wickeleinrichtungen über selbsthemmende Schneckengetriebe verbunden sein. Für die elektrische Energieversorgung der einzelnen Motoren ist vorteilhafterweise mit der Aufdeckeinrichtung AE eine Batterie BA, beispielsweise eine gewöhnliche Fahrzeug-Starterbatterie verbunden. Die Ansteuerung der einzelnen Antriebsmotoren kann vorteilhafterweise fernbedient über eine drahtlose Signalverbindung, insbesondere eine Funkverbindung, erfolgen, wofür ein Benutzer ein mobiles Bediengerät auf einem bei der Entnahme einer Teilmenge von Silage benutzten Fahrzeug mitführen kann und dadurch das Fahrzeug nicht für die Kommandierung der Antriebsmotoren der Aufdeckeinrichtung verlassen muss. Die verschiedenen Antriebsmotoren können einzeln kommandierbar sein, es kann aber auch über eine Steuereinrichtung im Bediengerät oder vorzugsweise einer Elektronik EL der Aufdeckeinrichtung vorgesehen sein, dass über die Bedieneinrichtung lediglich eine Kommandierung zur Verfahrung der Aufdeckeinrichtung in Richtung der Rückwand gegeben wird und ein solches einfaches Kommandosignal in der Elektronik EL der Aufdeckeinrichtung in eine Kommandofolge mit Anheben der Gewichtsanordnung GA mittels der Hebeeinrichtung, Verfahren der Aufdeckeinrichtung mittels des Antriebsmotors SM des Spannelementwickels SW und gleichzeitiger Aufwicklung frei werdender Abschnitte der Folienanordnung mittels des Antriebs PM des Folienwickels PW umgesetzt wird. Nach Wegfall des Verfahr-Kommandosignals von der Bedieneinrichtung oder nach Eingabe eines Stopp-Signals werden der Antriebsmotor des Spannelementwickels und Antriebsmotor des Folienwickels gestoppt werden und der Antriebsmotor der Wickelwelle GW der Hebeeinrichtung wird in einer die Absenkung der Gewichtsanordnung GA bewirkenden Drehrichtung eingeschaltet und dadurch die Gewichte auf der Folienanordnung nahe bei der neuen Vorderkante des Silo-Reststocks abgelegt.

In Längsrichtung LR beträgt der Abstand zwischen der Gewichtsanordnung GA und dem Einlauf der Folienanordnung in den Folienwickel PW vorteilhafterweise nicht mehr als 80 cm, vorzugsweise nicht mehr als 50 cm. Das Andrücken der Folienanordnung auf die Oberseite des Silo-Reststocks nahe bei der Vorderkante und in Längsrichtung nahe bei dem Folienwickel hält vorteilhafterweise auch die durch Wind auf die Folienanordnung einwirkenden Kräfte und damit die Gefahr der Beschädigung der Folienanordnung gering.

## Patentansprüche

1. Fahrsiloanordnung mit einem durch zwei annähernd parallele in Längsrichtung (LR) verlaufende Seitenwände (SW) seitlich begrenzten Siloraum mit einem Silostock (SS) aus Silage, mit einer den Silostock bedeckenden flexiblen Folienanordnung (PL) sowie mit einer in Längsrichtung verfahrbaren Aufdeckeinrichtung (AE), mittels welcher von einer Vorderseite (VS) des Siloraums her die Folienanordnung (PL) für schrittweise Entnahme von Silage bis zu einer Vorderkante (VK) des verbleibenden Silo-Reststocks (RS) vom Silostock abhebbar und auf einen Folienwickel (PW) aufwickelbar ist, wobei die Aufdeckeinrichtung (AE) eine verfahrbare Niederhalteeinrichtung (GR, GA) enthält, mittels welcher die Folienanordnung (PL) in jeweils neuer Längsposition auf die Oberseite des Silo-Reststocks (RS) andrückbar ist, und die Niederhalteeinrichtung eine Gewichtanordnung (GA) mit einem oder mehreren auf die Folienanordnung auflegbaren Gewichten (GE) enthält, **dadurch gekennzeichnet, dass** die Gewichtanordnung (GA) mittels einer Hebeeinrichtung (GG, GW) vor einer Verfahrung der Abdeckeinrichtung (AE) von der Folienanordnung (PL) abhebbar und nach Abschluss der Verfahrung auf die Folienanordnung (PL) auflegbar ist.

2. Fahrsiloanordnung nach Anspruch 1, **dadurch gekennzeichnet, dass** die Hebeeinrichtung (GW, GG) motorisch betätigbar ist.

3. Fahrsiloanordnung nach einem der Ansprüche 1 oder 2, **dadurch gekennzeichnet, dass** die Niederhalteeinrichtung zwei zugfeste flexible Spannelemente (SP) enthält, welche in Längsrichtung (LR) zwischen der Abdeckeinrichtung (AE) und einer Rückseite des Siloraums entlang der Seitenwände (SW) über der Follenanordnung (PL) verlaufen.

4. Fahrsiloanordnung nach Anspruch 3, **dadurch gekennzeichnet, dass** die Niederhalteeinrichtung zu jedem der beiden Spannelemente (SP) eine Wickeleinrichtung (VW) und eine auf dem Spannelement (SP) über der Folienanordnung (PL) abrollbare Andruckrolle (GR) enthält.

5. Fahrsiloanordnung nach Anspruch 4, **dadurch gekennzeichnet, dass** die Wickeleinrichtungen (VW) zu den Spannelementen (SP) motorisch antreibbar sind und zur Verfahrung der Abdeckeinrichtung (AE) durch Aufwickeln der Spannelemente (SP) dienen.

6. Fahrsiloanordnung nach einem der Ansprüche 1 bis 5, **dadurch gekennzeichnet, dass** eine Folienrandabdichtung an den Oberseiten der Seitenwände (SVV) jeweils eine nach oben offene Nut (LN) und einen flexiblen Strang (SC) aufweist, wobei die Folienränder (PR) durch die Nut geführt und mittels des klemmend in der Nut (LN) einliegenden Strangs (SC) in der Nut gehalten sind.

7. Fahrsiloanordnung nach Anspruch 6, **dadurch gekennzeichnet, dass** der Folienwickel (PW) höher liegt als die Nut (LN) und die Folienanordnung (PL) und der Strang (SC) durch die beim Aufwickeln der Folienanordnung (PL) auf den Folienwickel (PW) auf die Folienanordnung (PL) wirkende Zugkraft aus der Nut nach oben ausziehbar ist.

8. Fahrsiloanordnung nach Anspruch 7, **dadurch gekennzeichnet, dass** die Abdeckeinrichtung (AE) in Verfahrrichtung vor dem Folienwickel (PL) Sicherungsmittel aufweist, welche über dem Strang (SC) liegen und den Strang in seiner Position innerhalb der Nut (LN) sichern.

9. Fahrsiloanordnung nach einem der Ansprüche 1 bis 8, **dadurch gekennzeichnet, dass** die Abdeckeinrichtung (AE) mit Rädern (RR) auf den Oberseiten der Seitenwände (SW) abgestützt ist.

10. Fahrsiloanordnung nach Anspruch 8 oder 9, **dadurch gekennzeichnet, dass** die Sicherungsmittel durch Räder (RR) der Abdeckeinrichtung (AE) gebildet sind.

11. Fahrsiloanordnung nach Anspruch 10, **dadurch gekennzeichnet, dass** der Seitenabstand der Räder (RR) an den den Abstand der Seitenwände (SW) anpassbar ist.

12. Fahrsiloanordnung nach Anspruch 1 bis 11, **dadurch gekennzeichnet, dass** ein die Verfahrung der Aufdeckeinrichtung (AE) bewirkender Antrieb ferngesteuert betätigbar ist.

## Claims

1. A mobile silo arrangement, comprising a silo chamber with silo stock (SS) made of silage, said silo chamber being laterally bounded by two approximately parallel side walls (SW) extending in the longitudinal direction (LR), and comprising a flexible film arrangement (PL) covering the silo stock, and an uncovering device (AE) which is movable in the longitudinal direction and by means of which the film arrangement (PL), from a front side (VS) of the silo chamber, can be lifted from the silo stock for step-by-step removal of silage up to a front edge (VK) of the remaining residual silo stock (RS) and can be wound up on a film reel (PW), wherein the uncovering device (AE) contains a movable holding-down device (GR, GA), by means of which the film arrangement (PL) can be pressed in the respective new longitudinal position onto the upper side of the residual silo stock (RS), and the holding-down device contains a weight arrangement (GA) with one or several weights (GE) that can be placed on the film arrangement, **characterized in that** the weight arrangement (GA) can be lifted from the film arrangement (PL) by means of a lifting device (GG, GW) before a displacement of the uncovering device (AE) and can be placed on the film arrangement (PL) after completion of the displacement.

2. A mobile silo arrangement according to claim 1, **characterized in that** the lifting device (GW, GG) can be actuated by a motor.

3. A mobile silo arrangement according to one of the claims 1 or 2, **characterized in that** the holding-down device contains two tension-resistant flexible clamping elements (SP) which extend in the longitudinal direction (LR) between the uncovering device (AE) and a rear side of the silo chamber along the side walls (SW) above the film arrangement (PL).

4. A mobile silo arrangement according to claim 3, **characterized in that** the holding-down device for each of the two clamping elements (SP) comprises a winding device (VW) and a pressure roller (GR) which can be rolled off on the clamping element (SP) above the film arrangement (PL).

5. A mobile silo arrangement according to claim 4, **characterized in that** the winding devices (VW) can be driven by motor to the clamping elements (SP) and are used for displacing the uncovering device (AE) by winding up the clamping elements (SP).

6. A mobile silo arrangement according to one of the claims 1 to 5, **characterized in that** the film edge sealing respectively comprises on the upper sides of the side walls (SW) an upwardly open groove (LN) and a flexible strand (SC), wherein the film edges (PR) are guided through the groove and are retained in the groove by means of the strand (SC) which rests in a clamping manner in the groove (LN).

7. A mobile silo arrangement according to claim 6, **characterized in that** the film reel (PW) is situated at a higher altitude than the groove (LN), and the film arrangement (PL) and strand (SC) can be pulled upwardly out of the groove by the tensile force acting on the film arrangement (PL) during the winding up of the film arrangement (PL) on the film reel (PW).

8. A mobile silo arrangement according to claim 7, **characterized in that** the uncovering device (AE) comprises securing means in the travelling direction before the film reel (PL), which securing means are situated above the strand (SC) and secure the strand in its position within the groove (LN).

9. A mobile silo arrangement according to one of the claims 1 to 8, **characterized in that** the uncovering device (AE) is supported with wheels (RR) on the upper sides of the side walls (SW).

10. A mobile silo arrangement according to claim 8 or 9, **characterized in that** the securing means are formed by wheels (RR) of the uncovering device (AE).

11. A mobile silo arrangement according to claim 10, **characterized in that** the lateral distance of the wheels (RR) can be adjusted to the distance of the side walls (SW).

12. A mobile silo arrangement according to claim 1 to 11, **characterized in that** a drive producing the displacement of the uncovering device (AE) can be actuated by remote control.

## Revendications

1. Arrangement de silo mobile avec un espace de silo délimité latéralement par deux parois latérales (SW) approximativement parallèles dans le sens longitudinal (LR) avec un contenu de silo (SS) composé d'ensilage, avec un arrangement de feuille flexible (PL) délimitant le contenu de silo et avec un dispositif de découvert (AE) mobile dans le sens longitudinal, au moyen duquel l'arrangement de feuille (PL) peut être soulevé à partir d'une face antérieure (VS) de l'espace de silo pour le prélèvement progressif d'ensilage jusqu'à un bord antérieur (VK) du contenu restant du silo (RS) et peut être enroulé sur un enrouleur de feuille (PW), le dispositif de découvert (AE) comprenant un dispositif de maintien (GR, GA) mobile au moyen duquel l'arrangement de feuille (PL) peut être pressé dans chaque nouvelle position sur la face supérieure du contenu restant du silo (RS), et le dispositif de maintien comprend un dispositif de poids (GA) avec un ou plusieurs poids (GE) pouvant être appliqués sur l'arrangement de feuille, **caractérisé en ce que** le dispositif de poids (GA) peut être soulevé de l'arrangement de feuille (PL) au moyen d'un dispositif de levage (GG, GW) avant un déplacement du dispositif de découvert (AE) et posé sur l'arrangement de feuille (PL) à la fin du déplacement.

2. Arrangement de silo mobile selon la revendication 1, **caractérisé en ce que** le dispositif de levage (GW, GG) peut être actionné par un moteur.

3. Arrangement de silo mobile selon l'une des revendications 1 ou 2, **caractérisé en ce que** le dispositif de maintien comprend deux éléments tendeurs (SP) flexibles résistants à la traction, qui s'étendent dans le sens longitudinal (LR) entre le dispositif de découvert (AE) et une face arrière de l'espace de silo le long des parois latérales (SW) par-dessus l'arrangement de feuille (PL).

4. Arrangement de silo mobile selon la revendication 3, **caractérisé en ce que** le dispositif de maintien comprend pour chacun des deux éléments tendeurs (SP) un dispositif d'enroulement (VW) et un rouleau presseur (GR) pouvant rouler sur l'élément tendeur (SP) par-dessus l'arrangement de feuille (PL).

5. Arrangement de silo mobile selon la revendication 4, **caractérisé en ce que** les dispositifs d'enroulement (VW) pour les éléments tendeurs (SP) peuvent être entraînés par un moteur et servent à déplacer le dispositif de découvert (AE) en enroulant les éléments tendeurs (SP).

6. Arrangement de silo mobile selon l'une des revendications 1 à 5, **caractérisé en ce qu'**une étanchéité sur le bord de la feuille sur les faces supérieures des parois latérales (SW) présente une gorge (LN) ouverte vers le haut et une bande flexible (SC), les bords de la feuille (PR) étant guidés à travers la gorge et retenus dans celle-ci au moyen de la bande (SC) qui s'insère dans la gorge (LN) en les serrant.

7. Arrangement de silo mobile selon la revendication 6, **caractérisé en ce que** l'enrouleur de feuille (PW) est placé plus haut que la gorge (LN) et l'arrangement de feuille (PL) et la bande (SC) peut être tirée vers le haut hors de la gorge par la force de traction sur l'arrangement de feuille (PL) lors de l'enroulement de l'arrangement de feuille (PL) sur l'enrouleur de feuille (PW).

8. Arrangement de silo mobile selon la revendication 7, **caractérisé en ce que** le dispositif de découvert (AE) présente, avant l'enrouleur de feuille (PL) dans le sens de déplacement, des moyens de fixation qui reposent par-dessus la bande (SC) et fixent celle-ci en position dans la gorge (LN).

9. Arrangement de silo mobile selon l'une des revendications 1 à 8, **caractérisé en ce que** le dispositif de découvert (AE) s'appuie par des roues (RR) sur les faces supérieures des parois latérales (SW).

10. Arrangement de silo mobile selon la revendication 8 ou 9, **caractérisé en ce que** les moyens de fixation sont formés par des roues (RR) du dispositif de découvert (AE).

11. Arrangement de silo mobile selon la revendication 10, **caractérisé en ce que** l'écartement latéral des roues (RR) peut être adapté à celui des parois latérales (SW).

12. Arrangement de silo mobile selon les revendications 1 à 11, **caractérisé en ce qu'**un entraînement réalisant le déplacement du dispositif de découvert (AE) peut être actionné par commande à distance.
